# EUROPEAN PATENT SPECIFICATION

(11) **EP 4 175 519 B1**
(45) Date of publication and mention of the grant of the patent: **10.09.2025**
(21) Application number: 21746809.9
(22) Date of filing: 02.07.2021
(51) Int. Cl.: A47J 31/60

(54) **SYSTEM FOR FILTERING AND REGULATING THE ELECTROLYTIC COMPOSITION OF WATER FOR AN ESPRESSO COFFEE MACHINE AND ASSOCIATED ESPRESSO COFFEE MACHINE**
SYSTEM ZUM FILTERN UND REGELN DER ELEKTROLYTISCHEN WASSERZUSAMMENSETZUNG FÜR EINE ESPRESSO-KAFFEEMASCHINE UND ZUGEHÖRIGE ESPRESSO-KAFFEEMASCHINE
SYSTÈME POUR LA FILTRATION ET LA RÉGULATION DE LA COMPOSITION ÉLECTROLYTIQUE DE L'EAU POUR UNE MACHINE À CAFÉ EXPRESSO ET MACHINE À CAFÉ EXPRESSO ASSOCIÉE

(30) Priority: 02.07.2020 IT 202000016078
(43) Date of publication of application: 10.05.2023
(73) Proprietor: La Marzocco S.r.l., 50038 Scarperia (FI) (IT)
(72) Inventor: WURM, Enrico Vittorio, 50038 Scarperia E San Piero (FI) (IT); GIORDANO, Emanuele, 50038 Scarperia E San Piero (FI) (IT); FRANCINI, Filippo, 50038 Scarperia E San Piero (FI) (IT)
(74) Representative: Colombo, Stefano Paolo
(86) International application number: PCT/IB2021/055944
(87) International publication number: WO 2022/003636

(56) References cited:
- EP-A1- 3 489 200
- WO-A1-2012/052855
- WO-A1-2014/027482
- WO-A1-2018/234241
- WO-A1-2020/089297
- CN-A- 105 942 857
- US-A1- 2003 159 979
- US-B1- 8 790 513

## Description

### BACKGROUND OF THE INVENTION

The present invention relates in general to the field of machines for the preparation of beverages. More particularly, it relates to a system for filtering and regulating the electrolytic composition of the water for an espresso coffee machine. The present invention also relates to an espresso coffee machine comprising such a system and a method for the controlled extraction of coffee.

### STATE OF THE ART

Water is quantitatively the most important ingredient in espresso coffee and, after the coffee itself, the ingredient which affects the beverage taste the most.

Apart from the different process types for obtaining the beverage, what remains fundamental, besides the primary product (coffee), is the "extraction liquid". It is not by chance that 95-98% of the composition of a cup of coffee, from espresso to filter coffee, from moka to boiled, is composed of water. This vital element can contain various substances capable of modifying the final result of the beverage in terms of extracted volatile aromatic compounds and their flavours. Water, in fact, is not only an inert, colourless, tasteless and odourless solvent, but can be considered in all respects an "ingredient" fundamental to the final quality.

The Applicant has noticed that at present the chemical composition of the water feeding a coffee machine has a very great variability both considering various locations of the same country and, more so, considering different nations.

The water supplied by the public water supply contains, in fact, variable amounts of salts and is characterized by variable values of parameters such as hardness, i.e. the content of calcium and magnesium ions, pH, etc.

These differences have multiple repercussions, both on the correct operation and duration of the coffee machines and on the quality of the beverage obtained, resulting in a substantial impossibility of controlling and standardizing the performance of the machines installed in different parts of the world.

As regards, for example, the correct operation and durability of espresso coffee machines, the use of water with a high content of calcium and magnesium ions, if not suitably treated, can lead to the formation, even in short times, of deposits which are intolerable due, for example, to the precipitation of insoluble salts such as calcium carbonate and magnesium hydroxide.

It is known, in order to solve this drawback, to use water softened by ion exchange resins which replace the ions responsible for hardness with sodium ions, thus preventing the deposits of limestone (calcium carbonate and magnesium carbonate). It is also known to use completely demineralized water which is then remineralized in an uncontrolled fashion.

WO 2012/052855 A1 discloses a method and related system for filtering water, wherein the method comprises the steps of receiving a flow of water having an initial concentration of salts, filtering it in order to create a flow of filtered water having a first concentration of salts lower than the initial concentration and a flow of discharge water having a second concentration of salts higher than the initial concentration, mixing the flow of filtered water with a determined fraction of the flow of discharge water for generating a delivery flow having a predetermined concentration of salts, and wherein the system comprises a filtering device which filters the flow of water and emits the flow of filtered water and the flow of discharge water, a flow control device which separates the determined fraction of the flow of discharge water from the remaining fraction and emits such determined fraction, and a mixing device which mixes the filtered water and the determined fraction of the flow of discharge water and emits the delivery flow from an outlet intended to be connected to a use device.

US 8,790,513 B1 discloses a beverage water maker.

WO 2020/089297 A1 discloses an active system for monitoring and filtering the water for an espresso coffee machine and associated espresso coffee machine.

### SUMMARY OF THE INVENTION

The Applicant has noted that both strategies drastically alter the chemical composition, and therefore also the chemical-physical characteristics of the water used for the coffee extraction. Furthermore, the Applicant has noticed that undesired effects may occur on the organoleptic characteristics of the beverage obtained. Moreover, demineralized water, especially if heated, can become aggressive for the components of the coffee machine.

The term "specific ion effect", or "Hofmeister effect", is used to indicate a series of physical-chemical phenomena that occur with organic molecules dissolved in aqueous solutions containing salts. Among these phenomena one of the most studied is the variation in solubility of the organic molecules in aqueous solution as the electrolytic composition of the solution varies.

The Applicant has therefore noticed that the chemical composition, and in particular the electrolytic composition, of the water used in espresso coffee machines can alter the solubility of the organic molecules contained in the ground coffee, and therefore favour, or not, their extraction during the coffee preparation.

In fact, the preparation of espresso coffee can be considered as an extraction process of a series of substances from a porous organic matrix (ground coffee powder) with a polar solvent (water), therefore a distribution between two phases and, as such, conditioned by the relative affinity of each substance for the two phases.

However, the relationship between the water solubility of organic molecules and the presence of salts, although long studied with respect to macromolecules such as proteins and nucleic acids, does not appear to have been studied with regard to small organic molecules. In particular, to the best of the Applicant's knowledge, there is no systematic study in the prior art on the effect of ions on the water solubility of small organic molecules under high temperature and high pressure conditions, nor are reported in the art methods of using this effect in extraction processes from organic matrices of interest in the food industry.

In order to control and/or standardize the characteristics of the espresso coffee, the Applicant has set the objective of developing a system and a method for the controlled extraction of the organic molecules present in the ground coffee, useful during the preparation of the espresso coffee, which allows, for example, to obtain a beverage with desired organoleptic characteristics.

Advantageously, this system and method is also able to render the water used for the preparation of the espresso coffee less corrosive or wearing for the components of an espresso coffee machine.

Advantageously, the method based on the specific ion effect allows to control the chemical composition, and therefore the organoleptic characteristics, of the coffee extract obtained, modulating the electrolytic composition of the water used.

According to a first aspect, the present invention relates to a method for the controlled extraction of at least one organic molecule present in ground coffee, during the preparation of an espresso coffee in a machine for the preparation and dispensing of an espresso coffee, said method comprising the steps of:
a) demineralizing the water;
b) adding to said demineralized water at least one organic and/or inorganic salt; and
c) using the water thus obtained for the preparation of the espresso coffee;
wherein said at least one organic and/or inorganic salt is added in step b) in the form of one or more aqueous saline solutions prepared from demineralized water.

Advantageously, the method according to the present invention further comprises a water filtration step.

According to an embodiment, said at least one organic and/or inorganic salt is added in step b) to the demineralized water both in solid form and in the form of one or more aqueous saline solutions prepared from demineralized water.

Preferably, the addition in step b) of the process according to the present invention is carried out by homogeneously mixing.

Advantageously, the addition in step b) is carried out proportionally to the water flow required by the machine.

In particular, the demineralization of step a) according to the present invention can be total or partial. Preferably demineralization is total.

Preferably, the at least one salt added in step b) according to the present invention is an inorganic salt.

Preferably, said inorganic salt is chosen from the group comprising sodium, potassium, magnesium, and calcium salts. Even more preferably said inorganic salt is chosen from the group comprising potassium chloride, sodium chloride, magnesium chloride, calcium chloride, potassium sulphate, potassium nitrate, calcium sulphate and magnesium sulphate.

Advantageously, the amount of salt to be added in step b) according to the present invention can be adjusted, on the basis of the water flow required by the machine, using aqueous solutions containing suitable concentrations of the selected one or more salts. Typically, the aqueous saline solution will have a concentration of from 1 mM to 200 mM, preferably from 2 mM to 100 mM.

It is also an object of the present invention to provide a system to be inserted in series at the inlet of the water in a coffee machine, allowing to suitably adjust the electrolytic composition of the water to be used in the coffee extraction step.

Therefore, in a second aspect, the present invention relates to a system for dynamic regulation of the electrolytic composition of the water for an espresso coffee machine, comprising a device for the demineralization and optionally filtration of the water, and a device for the addition of at least one organic and/or inorganic salt to the demineralized water, wherein said device for the addition of at least one organic and/or inorganic salt to the demineralized water is a device able to provide one or more aqueous saline solutions prepared from demineralized water.

According to a further embodiment, said device for the addition of at least one organic and/or inorganic salt to the demineralized water is a device able to provide to the demineralized water said at least one organic and/or inorganic salt both in solid form and in the form of one or more aqueous saline solutions prepared from demineralized water.

Advantageously, the addition is carried out proportionally to the water flow required by the machine.

Finally, according to a third aspect, the present invention relates to a machine for preparing and dispensing espresso coffee comprising:
a water supply;
a dispensing group configured to cooperate with a portafilter (filter holder) equipped with a filter basket with a puck of coffee powder; the machine being configured to supply pressurized water to said coffee powder puck to dispensing an espresso coffee, and
a system for regulating the electrolytic composition of the water to be used for the preparation of the espresso coffee, the system comprising a water demineralization device, and a device for the addition of at least one organic and/or inorganic salt to the demineralized water;
wherein said device for the addition of at least one organic and/or inorganic salt to the demineralized water is a device able to provide one or more aqueous saline solutions prepared from demineralized water.

Preferably, the system according to the present invention further comprises a water filtration device.

According to a further embodiment, said device for the addition of at least one organic and/or inorganic salt to the demineralized water is a device able to provide to the demineralized water said at least one organic and/or inorganic salt both in solid form and in the form of one or more aqueous saline solutions prepared from demineralized water.

Advantageously, the addition takes place proportionally to the water flow required by the machine.

A partializer may also be provided which receives water upstream of the corrector and supplies water to the addition device, so that the machine is supplied with a portion of water which has passed through the addition device and a portion which has not been remineralized.

The partializer may comprise a proportional valve.

### BRIEF DESCRIPTION OF THE DRAWINGS

The present invention will become completely clear from the following detailed description, given by way of non-limiting example, to be read with reference to the enclosed drawings, in which:
- Figure 1 is an exemplary representation of an espresso coffee machine comprising the system according to the present invention;
- Figure 2 is a simplified representation of a system according to a first embodiment of the present invention;
- Figure 3 is a simplified representation of a system according to a second embodiment of the present invention:
- Figures 4a-b are graphs representing the amount of trigonelline (white columns) and caffeine (black columns) extracted (mg/g, ordinate axis) at 90°C (panel a) and at 27°C (panel b);
- Figures 5a-b are graphs showing the variation of the octanol/water partition coefficient (Kow, ordinate) as a function of the temperature (abscissa) for caffeine (panel a) and for trigonelline (panel b);
- Figures 6a-b are graphs representing the amount of caffeine (in mg/g, ordinate axis) extracted using fully demineralized ultrapure water (MilliQ), or 2-4 mM (panel a) or 50 mM (panel b) aqueous solutions;
- Figures 7a-b are graphs representing the amount of carbohydrates, measured as pectin (in mg/g, ordinate axis), extracted using fully demineralized ultrapure water (MilliQ), or 2-4 mM (panel a) or 50 mM (panel b) aqueous solutions; and
- Figures 8a-d are graphs showing values (%, ordinate axis) of the substances conferring a certain flavour extracted using aqueous solutions containing sodium (panel a), potassium (panel b), magnesium (panel c), and calcium (panel d) ions.

### DETAILED DESCRIPTION

According to the present invention, a method for treating the water used in an espresso coffee machine is provided. The method, aimed at controlling the chemical composition, and in particular the electrolytic composition, of the water to be used for the preparation of espresso coffee, provides a step of demineralization, total or partial, and optionally filtration of the water, and then a step in which one or more organic and/or inorganic salts are added to the water.

According to the present invention, there is provided a method for the controlled extraction of at least one organic molecule present in ground coffee, during the preparation of espresso coffee in a machine for the preparation and dispensing of espresso coffee, said method comprising the steps of:
a) at least partially demineralizing and optionally filtering the water;
b) by homogeneously mixing adding to said demineralized water at least one organic and/or inorganic salt, proportionally to the water flow required by the machine; and
c) using the water thus obtained for the preparation of the espresso coffee;
wherein said at least one organic and/or inorganic salt is added in step b) in the form of one or more aqueous saline solutions prepared from demineralized water.

Preferably, according to the present invention, the step a) of demineralization, and optionally filtration, can be carried out with techniques known in the art, for example by reverse osmosis, distillation, etc., or by distillation with Millipore^{®} device. In this way, the water obtained from step a) of the method according to the present invention can be water with various degrees of purity, for example distilled water of type I, II or III. Preferably, the water obtained is completely demineralized ultrapure water of type 1 (MilliQ^{®}).

Subsequently, depending on the organoleptic properties to be imparted to the espresso coffee, one or more organic and/or inorganic salts are added to the water at the desired concentration. According to embodiments, the salts are added in the form of one or more aqueous saline solutions prepared from demineralized water and containing one or more organic and/or inorganic salt with the appropriate concentration. In addition, or in alternative, the salts are added in solid form to the demineralized water.

The Applicant has found that specific organic and inorganic salts are capable of favouring, or on the contrary disadvantage, the extraction of the different organic molecules contained in the ground coffee.

The following Table 1 shows the ability of eight salts typically present in oligomineral waters to extract the most important organic components of the coffee.

The salts are reported, with respect to each substance to be extracted, in order of extractive ability, from the worst to the best extractor, i.e. in increasing order of quantity of substance extracted from the ground coffee. The red column indicates the amount of substance extracted using completely demineralized ultrapure water (MilliQ^{®}).

**TABLE 1**

| **Substance** | **Bad extractors** | **Good extractors** |
|---|---|---|
| **Carbohydrates** | KNO₃ < NaCl < | < K₂SO₄ < MgSO₄ < MgCl₂ < CaSO₄ < CaCl₂ < KCl |
| **Caffeine** | CaCl₂ < | < MgCl₂ < MgSO₄ < CaSO₄ NaCl < KCl < KNO₃, < K₂SO₄ < |
| **Trigonelline** | CaCl₂ < KCl < CaSO₄< | < MgSO₄ < K₂SO₄ < KNO₃< NaCl < MgCl₂ |
| **Caffeic Acid** | NaCl = CaSO₄ = MgSO₄ < | < K₂SO₄ < MgCl₂< KNO₃< KCl < CaCl₂ |
| **Ferulic Acid** | NaCl = CaSO₄ = MgSO₄ = MgCl₂ < | < CaCl₂ < K₂SO₄ < KNO₃< KCl |
| **Malic Acid** | NaCl < MgCl₂< KCl < | < MgSO₄ < CaCl₂ < CaSO₄ < KNO₃ < K₂SO₄ |
| **Citric Acid** | KNO₃ < NaCl < MgSO₄ < MgCl₂ < CaSO₄ < KCL < K₂SO₄ < CaCl₂ < | |
| **Nicotinic Acid** | NaCl = CaSO₄ = MgSO₄ = MgCl₂ = KNO₃ = K₂SO₄ = | < CaCl₂ < KCl |
| **Melanoidin** | CaSO₄ < KNO₃< CaCl₂ < K₂SO₄ < MgSO₄ KCl < MgCl₂< NaCl < | |

From the data reported in Table 1 it is possible to identify, for each of the tested substances, the electrolytes which act as better or worse extractor (Table 2). It can also be noted that in many cases individual ions (e.g. chloride ion, calcium ion, etc.) are responsible for the major variations, and not the specific salt used.

**TABLE 2**

| **Substance** | **Better extractor** | **Worse extractor** |
|---|---|---|
| Pectin (carbohydrates) | Potassium | Potassium nitrate |
| Caffeine | Sodium | Magnesium |
| Trigonelline | Magnesium | Calcium |
| Caffeic acid | Potassium | Potassium sulphate |
| Ferulic acid | Potassium | Sodium and magnesium |
| Malic acid | Potassium nitrate | Potassium sulphate |
| Citric acid | Calcium | Potassium nitrate |
| Nicotinic acid | Potassium | Sodium and magnesium |
| Pectin (carbohydrates) | Potassium | Potassium nitrate |

By accurately choosing the type and amount of salts dissolved in the water used for the preparation of espresso coffee, it is possible to control the chemical composition of the beverage obtained, and therefore its organoleptic characteristics. Each of the above substances, in fact, is characterized by a particular taste (Table 3) and its concentration in the coffee obtained contributes to give a particular taste.

The controlled extraction according to the present invention therefore allows, starting from the same mixture of powdered coffee, to obtain espresso coffee with specific organoleptic characteristics (for example acidity, sweetness, bitterness, etc.). More details on this will be offered in the examples.

**TABLE 3**

| **Substance** | **Taste** |
|---|---|
| Pectin (carbohydrates) | Sweetness |
| Caffeine | Bitterness |
| Trigonelline | Bitterness |
| Caffeic acid | Bitterness |
| Ferulic acid | Phenolic |
| Malic acid | Acidity/fruity |
| Citric acid | Citrusy acidity |
| Nicotinic acid | Floral |
| Melanoidin | Toasting / caramelizing |

According to the method of the present invention, therefore, a system is provided for regulating the electrolytic composition of the water so that the water supplied to the coffee machine allows to obtain an espresso coffee with specific organoleptic characteristics. This also enables the performance of the coffee machines to be standardized, in terms of the quality of the coffee obtained and of the efficiency and durability of the machine, regardless of the place where the machine is installed, i.e. the quality of the water available from the public water network.

According to the present invention, there is also provided a system for regulating the electrolytic composition of the water for an espresso coffee machine, characterized in that it comprises a water demineralization and optionally filtration device, and a device for adding at least one organic and/or inorganic salt to the demineralized water, wherein said device for the addition of at least one organic and/or inorganic salt to the demineralized water is a device able to provide one or more aqueous saline solutions prepared from demineralized water.

Finally, according to a third aspect, the present invention relates to a machine for preparing and dispensing espresso coffee comprising:
a water supply;
a dispensing group configured to cooperate with a portafilter (filter holder) equipped with a filter basket with a coffee powder puck; the machine being configured to supply pressurized water to said coffee powder puck for dispensing an espresso coffee, and
a system for regulating the electrolytic composition of the water to be used for the preparation of the espresso coffee, the system comprising a water demineralization and optionally filtration device, and a device for adding at least one organic and/or inorganic salt to the demineralized water, wherein said device for the addition of at least one organic and/or inorganic salt to the demineralized water is a device able to provide one or more aqueous saline solutions prepared from demineralized water.

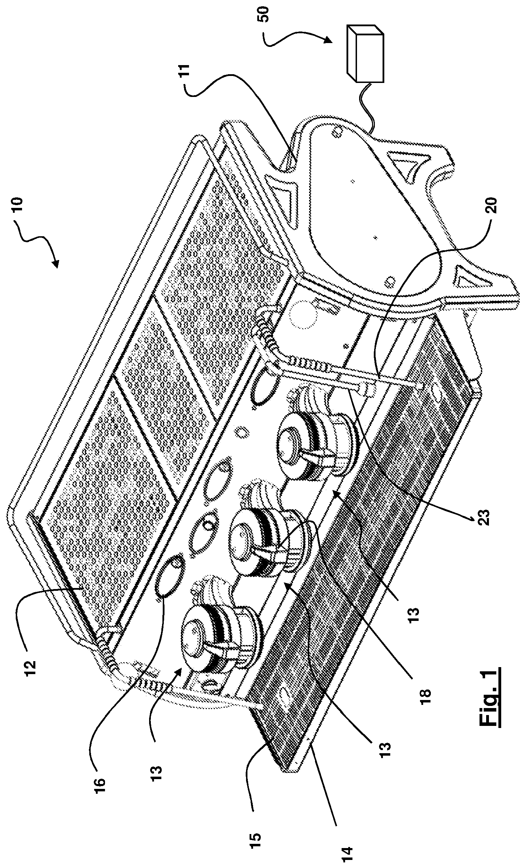

Figure 1 shows, by way of example only, an espresso coffee machine, overall identified by the reference number 10. The machine 10 comprises a substantially closed machine body 11 housing the main components of the machine, some of which will be described below. The machine 10 preferably comprises, at the top, a surface 12 on which the cups may be placed. An electrical resistance (not shown) or other heating system may also be provided to heat the cups on surface 12.

The machine 10 comprises at least one dispensing unit 13 for dispensing espresso coffee. Preferably, the machine 10 comprises several dispensing groups 13, for example three such as the exemplary machine of Figure 1. They could also be two, four or more. Underneath the dispensing units 13 there is preferably a drip tray 14, preferably partially closed at the top by a grille 15. Typically, the coffee cups are placed on the grille 15 during the dispensing of the espresso coffee.

A portafilter for supporting a filter basket for a coffee powder puck can be removably connected to each dispensing group 13.

The machine 10 may comprise one or more displays 16 and pushbuttons, for example for switching the machine on/off and/or for starting/ending the dispensing operation.

Preferably, the machine 10 shown in Figure 1 also comprises, for each dispensing group 13, a lever 18 (or pushbutton not shown in the figure) for starting/ending the dispensing of the espresso coffee and/or for modifying the dispensing pressure during the dispensing of the espresso coffee.

According to the present invention, the machine 10 also comprises the system 50 configured at least to demineralize at least partially, and optionally to filter, the water entering the machine, and subsequently to add at least one organic and/or inorganic salt to the water to be used for the preparation of the espresso coffee.

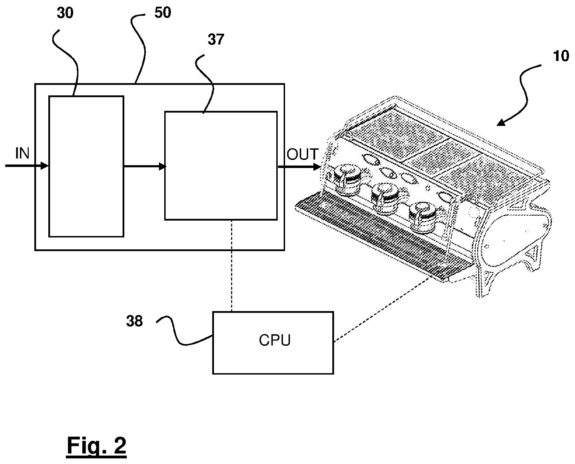

According to an embodiment of the present invention (Figure 2), the system 50 comprises a water demineralization and optionally filtration device 30 and a device for the addition of at least one organic and/or inorganic salt 37 to the demineralized water. Said device 37 for adding at least one organic and/or inorganic salt is a device able to provide one or more aqueous saline solutions prepared from demineralized water and containing the desired salts at appropriate concentrations. According to a further embodiment, said device 37 is a device able to provide to the demineralized water the desired salts both in solid form and in the form of one or more aqueous saline solutions prepared from demineralized water.

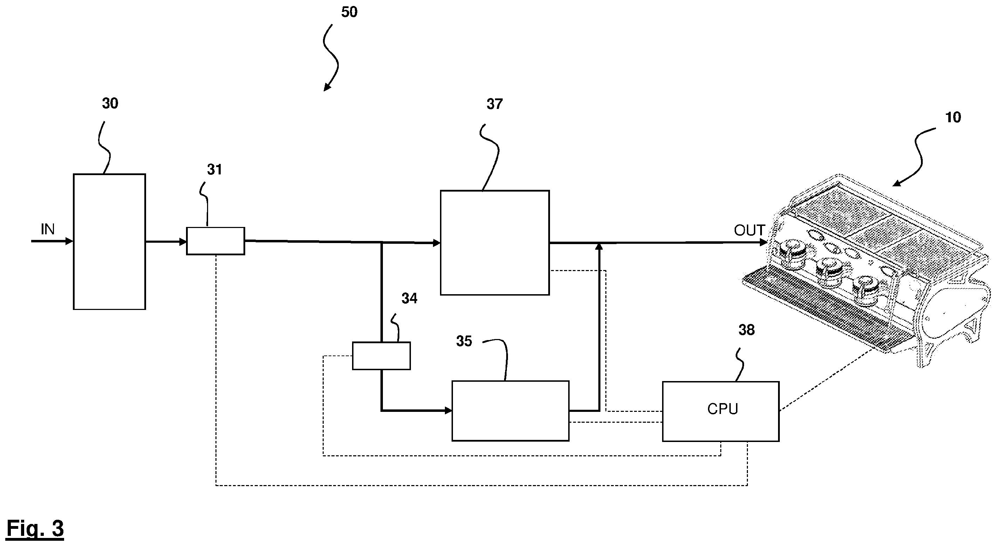

With reference to Figure 3, downstream of the water demineralization and optionally filtering device, a partializer 35 is preferably provided. In this way, a portion of water is fed to the machine which has passed through the addition device 37 and a portion which has not been remineralized. The partializer can for example be a proportional valve 35.

Preferably, the system 50 comprises one or more flowrate measuring devices. For example, a first flowmeter 31 may be provided upstream of the adding device 37 and a second flowmeter 34 upstream of the partializer.

### EXPERIMENTAL SECTION

The Applicant has carried out a series of tests under real conditions of use of the machine. Each 50 ml sample of espresso coffee was obtained using 14 g of ground coffee, which was extracted at 92°C and a pressure of 8 bar. Each espresso was filtered, diluted with Milli-Q water in a 1:100 ratio, and analysed to determine the concentration of the organic molecules typically present in the ground coffee. Such organic molecules of interest are: carbohydrates (expressed as pectin), caffeine, trigonelline, caffeic acid, ferulic acid, malic acid, citric acid, nicotinic acid, melanoidin.

For the determination of the concentration of each analyte five independent analyses were carried out for each of the extraction solutions used.

The Applicant has found that there is a direct relationship between the electrolytic composition of the water used for the extraction and the concentration of analytes of interest in the espresso coffee.

The Applicant has also found that this relationship can be exploited to obtain a coffee extract with controlled chemical composition, and therefore with controlled organoleptic characteristics.

### EXAMPLE 1

The first experimental measurements were related to the evaluation of a correlation between the type of salts present in the water used for the preparation of espresso coffee and the concentration in the obtained coffee of some organic molecules typically present in the espresso coffee.

By way of non-limiting example, the results relating to experiments for extracting caffeine and trigonelline contained in the espresso coffee prepared at different temperatures and using water having different ion composition are reported hereinafter.

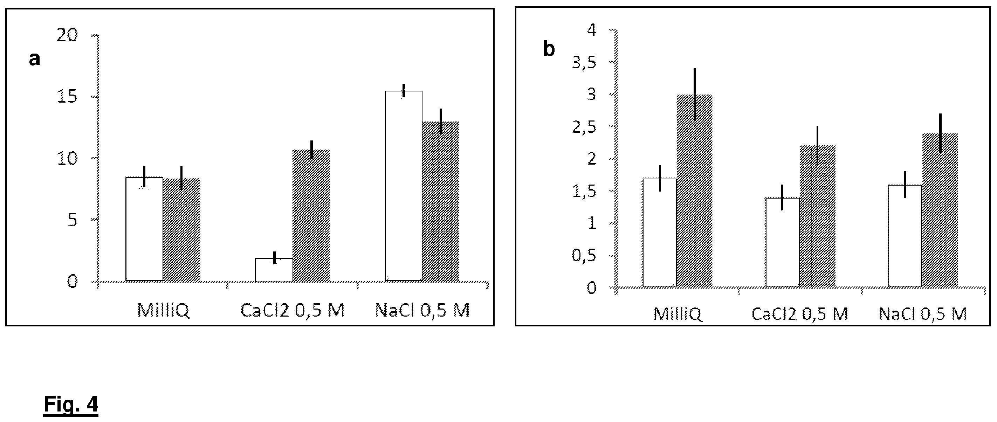

Figure 4a shows the data relating to the amount of trigonelline (white columns) and caffeine (black columns) extracted (in mg) per gram of ground coffee used, carrying out the extraction at 90°C with water with variable electrolytic composition, i.e. with completely demineralized ultrapure water (MilliQ), or water containing a concentration of 0.5 M calcium chloride (CaCl₂) or sodium chloride (NaCl).

Figure 4b shows the results for the same experiment carried out at 27°C.

From the analysis of the two figures it is evident that the extractive ability of the water varies both with the variation of its electrolytic composition and with the variation of the temperature, and that this effect is different for the two molecules analysed.

This is due to a variation in the relative affinity of such molecules for the two matrices (ground coffee and water), and this variation is specific for each molecule analysed.

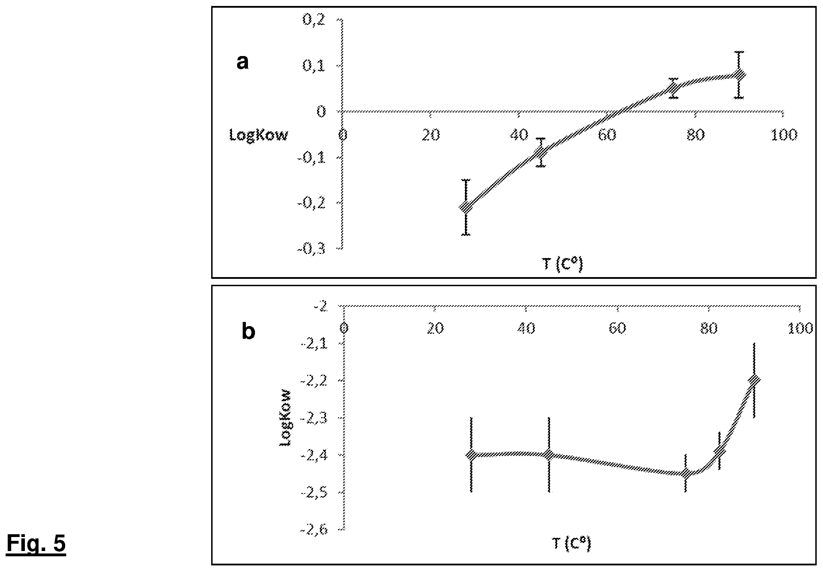

It has in fact been possible to experimentally determine the temperature dependence of the parameter indicating the relative affinity of a substance for an organic and a polar phase, i.e. the octanol water partition coefficient (Kow), both for caffeine (panel a) and for trigonelline (panel b; figure 5). The results show that the Kow changes with the temperature and with a different trend for the two substances.

### EXAMPLE 2

Thus, subsequently the variation of the extractive ability of the water has been studied with respect to the molecules typically contained in the ground coffee, as a function of the type of salt contained in the water used and its concentration.

By way of non-limiting example, the results relating to caffeine and carbohydrate, expressed as pectin, extraction experiments carried out at a temperature of 90-93°C, are reported hereinafter

The analytical methods used are reported in the following Table 4.

**TABLE 4**

| | Analysis type | Column | Mobile phase | Flow rate | Instrument |
|---|---|---|---|---|---|
| Caffeine | Liquid chromatography with DAD detector | C 18 | Methanol 24% | 1 ml/min | LTQ Thermo Fisher Scientific |
| | | | water 75,696 % | | |
| | | | formic acid 0,304% | | |
| Carbohydrates | Liquid chromatography with IR detector | Waters Sugar pack 1 | Water at 90 | 0,5 ml/min | HPLC Waters 2410 |

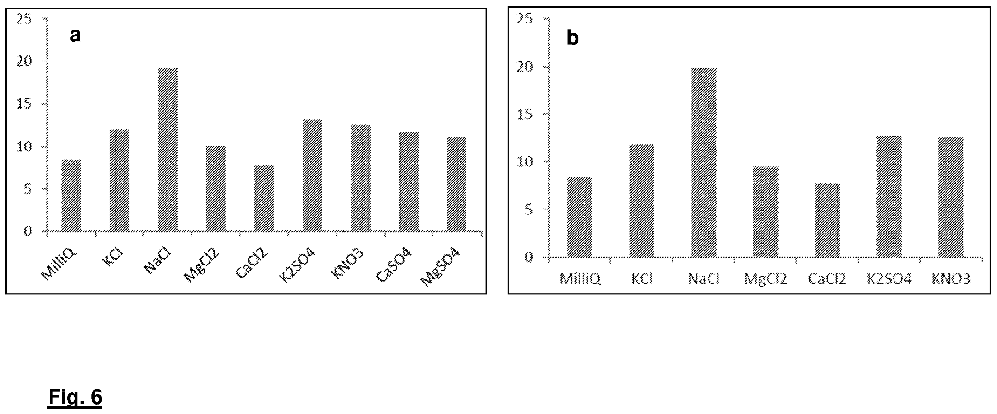

Figures 6a-b show the amount of caffeine (in mg), per gram of ground coffee used, extracted using completely demineralized ultrapure water (MilliQ), or 2-4 mm (Figure 6a) or 50 mm (Figure 6b) aqueous solutions of potassium chloride, sodium chloride, magnesium chloride, calcium chloride, potassium sulphate, potassium nitrate, calcium sulphate or magnesium sulphate.

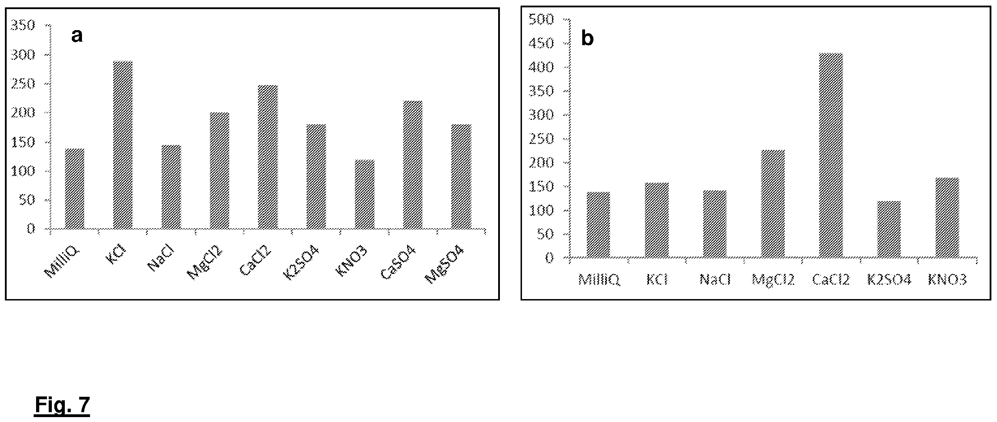

Figures 7a-b show the results of similar experiments relating to carbohydrates.

The above results therefore demonstrate that there is a direct correlation between the electrolytic composition of the water used for the preparation of espresso coffee and the chemical composition of the coffee obtained, which, as is known, is directly responsible for the organoleptic characteristics of the beverage.

The experiments carried out have therefore led to the conclusion that by controlling the electrolytic composition of the water used for the preparation of espresso coffee it is possible to control the organoleptic characteristics of the beverage obtained.

### EXAMPLE 3

Four different types of espresso were prepared starting from the same ground coffee powder, but using water treated according to the method of the present invention and containing 2-4 mM concentrations of sodium, potassium, magnesium or calcium ions.

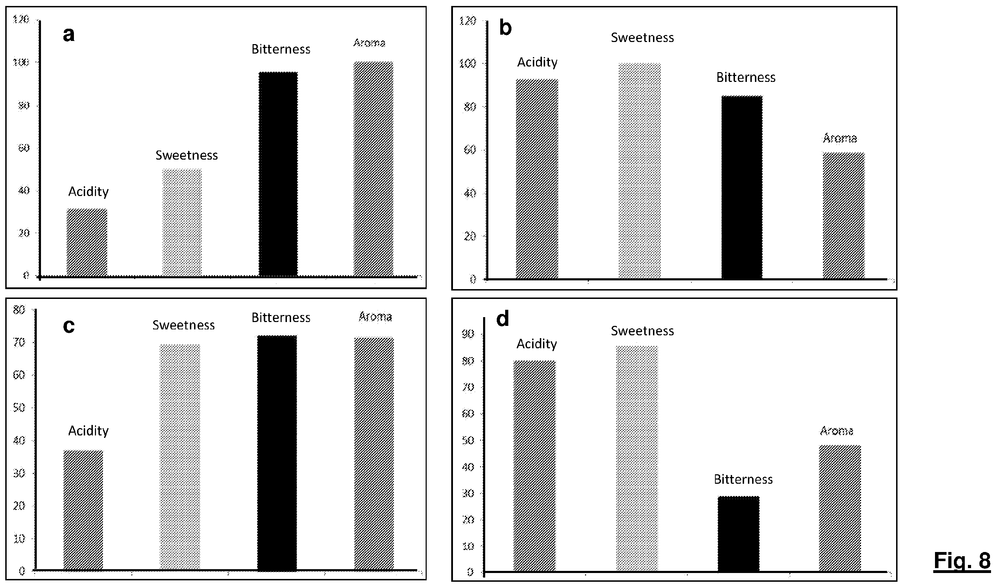

On the basis of the extractive abilities of each of these ions, it is possible to predict the organoleptic characteristics of the espresso coffee obtained with each saline solution. Graphs A-C of Figure 8 show the values, expressed as a percentage score, in which the maximum of the scale corresponds to the maximum extracted amount, of the substances which impart a given flavour.

Observing the graphs it is therefore possible to anticipate that the espresso coffee obtained starting from water containing 2mM sodium ions (graph A) will be characterized mainly by bitter taste and toasted/caramelized aroma; the one obtained starting from water containing 2mM potassium (graph B) will be mainly characterized by sweet taste and acidity; an espresso obtained from water containing 2.5 mM of magnesium ions (graph C) will be characterized by a strong aroma and a good balance of sweetness and bitterness; and the one obtained from water containing 4 mM calcium ions (graph D) will be characterized by a sweet taste and a marked acidity.

The espresso prepared with the saline solutions having a concentration of from 0.002 M to 0.004 M were subjected to a panel of 9 tasters: the panel judgments are reported in the following Table 5. The agreement between the experimental data and the judgment of the tasters is very high, almost total if one considers bitterness and acidity together. Distinguishing the two flavours on the palate can in fact be difficult.

**TABLE 5**

| | *NaCl* | *KCl* | *MgCl₂* | *CaCl₂* |
|---|---|---|---|---|
| *Acidity* | *44,4%* | *44,4%* | *11,2%* | *0%* |
| *Sweetness* | *0%* | *11,2%* | *11,2%* | *77,8%* |
| *Bitterness* | *33,3%* | *44,4%* | *11,1%* | *11,1%* |
| *Aroma* | *44,4%* | *0%* | *22,2%* | *33,3%* |

## Claims

1. A coffee machine (10) for preparing and dispensing espresso coffee comprising:
a water supply (IN);
a dispensing group (13) configured to cooperate with a portafilter equipped with a filter basket with a puck of coffee powder, the machine (10) being configured to supply pressurized water to said coffee powder puck for dispensing an espresso coffee, and
a system (50) to regulate the electrolytic composition of the water to be used for the preparation of espresso coffee, the system comprising a water demineralization device (30), and a device (37) for the addition of at least one organic and/or inorganic salt to the demineralized water, **characterized in that**
said device (37) for the addition of at least one organic and/or inorganic salt is a device providing one or more aqueous saline solutions prepared from demineralized water.

2. The coffee machine (10) according to claim 1, wherein said device (37) for the addition of at least one organic and/or inorganic salt is a device also providing said at least one organic and/or inorganic salt in solid form to the demineralized water.

3. The coffee machine (10) according to claim 1 or 2, wherein the system (50) further comprises a device (30) for water filtration.

4. The coffee machine (10) according to any one of claims 1-3, wherein the system (50) further comprises a partializer (35).

5. A method for the controlled extraction of at least one organic molecule present in ground coffee, during the preparation of an espresso coffee in a machine (10) for the preparation and dispensing of an espresso coffee, the method comprising the steps of:
a) demineralizing the water (30);
b) adding (37) at least one organic and/or inorganic salt to said demineralized water; and
c) using the water thus obtained for the preparation of espresso coffee,
wherein said at least one organic and/or inorganic salt is added in step b) in the form of one or more aqueous saline solutions prepared from demineralized water.

6. The method according to claim 5, wherein said at least one organic and/or inorganic salt is added in step b) also in solid form.

7. The method according to claim 5 or 6 further comprising a water filtration step (30).

8. The method according to any one of claims 5-7, wherein the addition in step (b) is carried out by homogeneously mixing.

9. The method according to any one of claims 5-8 wherein the addition in step (b) is carried out proportionally to the water flow rate required by the coffee machine.

10. The method according to any one of claims 5-9, wherein the demineralization of step (a) is total or partial.

11. The method according to any one of claims 5-10, wherein the at least one salt added in step (b) is an inorganic salt.

12. The method according to claim 11, wherein the inorganic salt is chosen from the group comprising sodium, potassium, magnesium and calcium salts.

13. The method according to claim 12, wherein the inorganic salt is chosen from the group comprising potassium chloride, sodium chloride, magnesium chloride, calcium chloride, potassium sulphate, potassium nitrate, calcium sulphate and magnesium sulphate.

14. A system (50) for regulating the electrolytic composition of water for an espresso machine (10), comprising a device (30) for demineralizing water, and a device (37) for adding at least one organic and/or inorganic salt to the demineralized water, **characterized in that** said device (37) for the addition of at least one organic and/or inorganic salt is a device providing one or more aqueous saline solutions prepared from demineralized water.

15. The system according to claim 14, wherein said device (37) for the addition of at least one organic and/or inorganic salt is a device also providing said at least one organic and/or inorganic salt in solid form to the demineralized water.

16. The system according to claim 14 or 15, further comprising a device (30) for filtering water.

## Patentansprüche

1. Kaffeemaschine (10) zum Zubereiten und Ausgeben von Espressokaffee, die aufweist:
eine Wasserzufuhr (IN);
eine Ausgabegruppe (13), die zum Zusammenwirken mit einem Siebträger ausgebildet ist, der mit einem Filterkorb mit einer Kaffeepulverscheibe ausgestattet ist, wobei die Maschine (10) zum Zuführen von unter Druck stehendem Wasser zu der Kaffeepulverscheibe zum Ausgeben eines Espressokaffees ausgebildet ist; und
ein System (50) zum Regulieren der elektrolytischen Zusammensetzung des für die Zubereitung von Espressokaffee zu verwendenden Wassers, wobei das System eine Vorrichtung zur Wasser-Entmineralisierung (30) und eine Vorrichtung (37) zum Hinzufügen von mindestens einem organischen und/oder anorganischen Salz zu dem entmineralisierten Wasser aufweist,
**dadurch gekennzeichnet,**
**dass** die Vorrichtung (37) zur Zugabe mindestens eines organischen und/oder anorganischen Salzes eine Vorrichtung zur Bereitstellung einer oder mehrerer wässriger Salzlösungen ist, welche aus einem entmineralisierten Wasser bereitet sind.

2. Kaffeemaschine (10) nach Anspruch 1, wobei die Vorrichtung (37) zur Zugabe von mindestens einem organischen und/oder anorganischen Salz eine Vorrichtung ist, die außerdem dem entmineralisierten Wasser dieses mindestens eine organische und/oder anorganische Salz in fester Form zuführt.

3. Kaffeemaschine (10) nach Anspruch 1 oder 2, wobei das System (50) weiterhin eine Vorrichtung (30) zur Wasserfilterung aufweist.

4. Kaffeemaschine (10) nach einem der Ansprüche 1 bis 3, wobei das System (50) außerdem einen Proportionierer (35) aufweist.

5. Verfahren zur kontrollierten Extraktion von mindestens einem organischen Molekül, das in gemahlenem Kaffee vorhanden ist, während der Zubereitung eines Espressokaffees in einer Maschine (10) zur Zubereitung und Ausgabe eines Espressokaffees, wobei das Verfahren die Schritte aufweist:
a) Entmineralisieren des Wassers (30);
b) Hinzufügen (37) von mindestens einem organischen und/oder anorganischen Salz zu dem entmineralisierten Wasser; und
c) Verwenden des so erhaltenen Wassers zur Zubereitung von Espressokaffee, wobei das mindestens eine organische und/oder anorganische Salz in Schritt b) in Form einer oder mehrerer wässriger Salzlösungen zugegeben wird, welche aus dem entmineralisierten Wasser bereitet sind.

6. Verfahren nach Anspruch 5, wobei das mindestens eine organische und/oder anorganische Salz in Schritt b) auch in fester Form zugegeben wird.

7. Verfahren nach Anspruch 5 oder 6, das außerdem einen Wasserfiltrationsschritt (30) aufweist.

8. Verfahren nach einem der Ansprüche 5 bis 7, wobei die Zugabe in Schritt (b) durch homogenes Mischen ausgeführt wird.

9. Verfahren nach einem der Ansprüche 5 bis 8, wobei die Zugabe in Schritt (b) proportional zur, von der Kaffeemaschine benötigten Durchflussmenge an Wasser erfolgt.

10. Verfahren nach einem der Ansprüche 5 bis 9, wobei die Entmineralisierung des Schrittes (a) vollständig oder teilweise erfolgt.

11. Verfahren nach einem der Ansprüche 5 bis 10, wobei das mindestens eine, im Schritt (b) hinzugefügte Salz ein anorganisches Salz ist.

12. Verfahren nach Anspruch 11, wobei das anorganische Salz aus der Gruppe ausgewählt wird, die Natrium-, Kalium-, Magnesium- und Calciumsalze aufweist.

13. Verfahren nach Anspruch 12, wobei das anorganische Salz aus der Gruppe ausgewählt wird, die Kaliumchlorid, Natriumchlorid, Magnesiumchlorid, Calciumchlorid, Kaliumsulfat, Kaliumnitrat, Calciumsulfat und Magnesiumsulfat aufweist.

14. System (50) zum Regulieren der elektrolytischen Zusammensetzung von Wasser für eine Espressomaschine (10), mit einer Vorrichtung (30) zum Entmineralisieren von Wasser und einer Vorrichtung (37) zum Hinzufügen mindestens eines organischen und/oder anorganischen Salzes zum entmineralisierten Wasser,
**dadurch gekennzeichnet,**
**dass** die Vorrichtung (37) zur Zugabe von mindestens einem organischen und/oder anorganischen Salz eine Vorrichtung zur Bereitstellung einer oder mehrerer wässriger Salzlösungen ist, welche aus einem entmineralisierten Wasser bereitet werden.

15. System gemäß Anspruch 14, wobei die Vorrichtung (37) zur Zugabe von mindestens einem organischen und/oder anorganischen Salz auch eine Vorrichtung ist, die das mindestens eine organische und/oder anorganische Salz in fester Form dem demineralisierten Wasser bereitstellt.

16. System gemäß Anspruch 14 oder 15, das außerdem eine Vorrichtung (30) zur Wasserfilterung aufweist.

## Revendications

1. Machine à café (10) pour préparer et distribuer du café expresso comprenant :
une alimentation en eau (IN) ;
un groupe de distribution (13) configuré pour coopérer avec un porte-filtre équipé d'un panier-filtre avec une galette de café en poudre, la machine (10) étant configurée pour alimenter ladite galette de café en poudre en eau sous pression pour distribuer un café expresso, et
un système (50) pour réguler la composition électrolytique de l'eau à utiliser pour la préparation du café expresso, le système comprenant un dispositif de déminéralisation de l'eau (30), et un dispositif (37) pour l'ajout d'au moins un sel organique et/ou inorganique à l'eau déminéralisée, **caractérisée en ce que**
ledit dispositif (37) pour l'ajout d'au moins un sel organique et/ou inorganique est un dispositif fournissant une ou plusieurs solutions salines aqueuses préparées à partir d'eau déminéralisée.

2. Machine à café (10) selon la revendication 1, dans laquelle ledit dispositif (37) pour l'ajout d'au moins un sel organique et/ou inorganique est un dispositif fournissant également ledit au moins un sel organique et/ou inorganique sous forme solide à l'eau déminéralisée.

3. Machine à café (10) selon la revendication 1 ou 2, dans laquelle le système (50) comprend en outre un dispositif (30) pour la filtration de l'eau.

4. Machine à café (10) selon l'une quelconque des revendications 1 à 3, dans laquelle le système (50) comprend en outre un dispositif de partialisation (35).

5. Procédé pour l'extraction contrôlée d'au moins une molécule organique présente dans du café moulu, lors de la préparation d'un café expresso dans une machine (10) pour la préparation et distribution d'un café expresso, le procédé comprenant les étapes de :
a) déminéralisation de l'eau (30) ;
b) ajout (37) d'au moins un sel organique et/ou inorganique à ladite eau déminéralisée ; et
c) utilisation de l'eau ainsi obtenue pour la préparation du café expresso,
dans lequel ledit au moins un sel organique et/ou inorganique est ajouté à l'étape b) sous la forme d'une ou plusieurs solutions salines aqueuses préparées à partir d'eau déminéralisée.

6. Procédé selon la revendication 5, dans lequel ledit au moins un sel organique et/ou inorganique est ajouté à l'étape b) également sous forme solide.

7. Procédé selon la revendication 5 ou 6, comprenant en outre une étape de filtration de l'eau (30).

8. Procédé selon l'une quelconque des revendications 5 à 7, dans lequel l'ajout à l'étape (b) est effectué par mélange homogène.

9. Procédé selon l'une quelconque des revendications 5 à 8, dans lequel l'ajout à l'étape (b) est effectué proportionnellement au débit d'eau requis par la machine à café.

10. Procédé selon l'une quelconque des revendications 5 à 9, dans lequel la déminéralisation de l'étape (a) est totale ou partielle.

11. Procédé selon l'une quelconque des revendications 5 à 10, dans lequel l'au moins un sel ajouté à l'étape (b) est un sel inorganique.

12. Procédé selon la revendication 11, dans lequel le sel inorganique est choisi dans le groupe comprenant les sels de sodium, de potassium, de magnésium et de calcium.

13. Procédé selon la revendication 12, dans lequel le sel inorganique est choisi dans le groupe comprenant le chlorure de potassium, le chlorure de sodium, le chlorure de magnésium, le chlorure de calcium, le sulfate de potassium, le nitrate de potassium, le sulfate de calcium et le sulfate de magnésium.

14. Système (50) pour la régulation de la composition électrolytique de l'eau pour une machine à expresso (10), comprenant un dispositif (30) pour la déminéralisation de l'eau, et un dispositif (37) pour l'ajout d'au moins un sel organique et/ou inorganique à l'eau déminéralisée,
**caractérisé en ce que**
ledit dispositif (37) pour l'ajout d'au moins un sel organique et/ou inorganique est un dispositif fournissant une ou plusieurs solutions salines aqueuses préparées à partir d'eau déminéralisée.

15. Système selon la revendication 14, dans lequel ledit dispositif (37) pour l'ajout d'au moins un sel organique et/ou inorganique est un dispositif fournissant également ledit au moins un sel organique et/ou inorganique sous forme solide à l'eau déminéralisée.

16. Système selon la revendication 14 ou 15, comprenant en outre un dispositif (30) pour le filtrage de l'eau.
